# EUROPEAN PATENT APPLICATION

(11) **EP 4 234 617 A1**
(43) Date of publication of application: **30.08.2023**
(21) Application number: 21898536.4
(22) Date of filing: 23.11.2021
(51) Int. Cl.: C08K 3/22, C08L 23/00, C08K 3/013, C08F 4/659, C08F 4/6592

(54) **ORGANIC-INORGANIC HYBRID POLYOLEFIN COMPOSITE AND PREPARATION METHOD THEREOF**

(30) Priority: 24.11.2020 KR 20200159261; 22.11.2021 KR 20210161559
(71) Applicant: Lg Chem, Ltd., Seoul 07336 (KR)
(72) Inventor: LEE, Sang Yool, Daejeon 34122 (KR); CHO, Joon Hee, Daejeon 34122 (KR); SONG, Eun Kyoung, Daejeon 34122 (KR); AN, Sangeun, Daejeon 34122 (KR); SHIN, Eunyoung, Daejeon 34122 (KR); LEE, Jinseok, Daejeon 34122 (KR); UM, Kiju, Daejeon 34122 (KR); KIM, Jinmo, Daejeon 34122 (KR)
(74) Representative: Hoffmann Eitle
(86) International application number: PCT/KR2021/017208
(87) International publication number: WO 2022/114710

(57) **Abstract**

The present disclosure relates to an organic-inorganic hybrid polyolefin composite and a preparation method of the same.

## Description

### [TECHNICAL FIELD]

### CROSS CITATION WITH RELATED APPLICATION(S)

This application claims the benefits of Korean Patent Applications No. 10-2020-0159261 filed on November 24, 2020 and No. 10-2021-0161559 filed on November 22, 2021 with the Korean Intellectual Property Office, the disclosure of which is incorporated herein by reference in its entirety.

The present disclosure relates to an organic-inorganic hybrid polyolefin composite and a preparation method of the same.

### [BACKGROUND]

A Li-ion battery separator (LiBS) is one of the important materials that play a role in determining the lifespan, efficiency, and stability of a battery.

In particular, as it is an important material with a high contribution to battery performance, it requires a variety of required properties, and chemical stability, thickness, porosity, pore size, mechanical strength, wettability, dimensional stability, shutdown, and thermal shrinkage are the representative required properties.

In general, LiBS is manufactured by appropriately mixing polyethylene and polypropylene that are inexpensive and satisfy chemical stability and mechanical properties, but it is difficult to satisfy the required properties of wettability, dimensional stability, shutdown, thermal shrinkage, etc., due to the limitations of olefin polymers. In order to solve this problem, various inorganic materials and additives are added when manufacturing LiBS, but it is difficult to solve the problem of deterioration in physical properties overtime caused by mixing and dispersing, and migration of the olefin polymer.

Accordingly, there is a continuous need to develop a polyolefin material capable of solving the mixing and dispersing problem of inorganic materials and olefin polymers and the migration problem while controlling functions such as excellent mechanical properties, wettability, dimensional stability, shutdown, low thermal shrinkage, etc., when manufacturing a Li-ion battery separator (LiBS).

### [DETAILED DESCRIPTION OF THE INVENTION]

### [Technical Problem]

In the present disclosure, there are provided an organic-inorganic hybrid polyolefin composite and a preparation method of the same.

### [Technical Solution]

In one embodiment of the present disclosure, there is provided an organic-inorganic hybrid polyolefin composite including a polyolefin and a non-porous inorganic material bonded to at least a portion of the polyolefin, wherein the non-porous inorganic material is included in an amount of 0.4 wt% or more based on the total weight of the organic-inorganic hybrid polyolefin composite.

In another embodiment of the present disclosure, there is provided a preparation method of the organic-inorganic hybrid polyolefin composite according to the above embodiment.

In another embodiment of the present disclosure, there is provided a material for a separator obtained by using the organic-inorganic hybrid polyolefin composite according to the above embodiment.

The terminology used herein is for the purpose of describing particular embodiments only, and is not intended to limit the present invention.

The singular forms are intended to include the plural forms as well, unless the context clearly indicates otherwise.

In this disclosure, the terminology "include" , "comprise" , or "have" is used to describe stated features, numbers, steps, components, or combination thereof, and do not preclude the addition of one or more other features, numbers, steps, components, or combinations thereof.

The terminology "about" or "substantially" is intended to have meanings close to numerical values or ranges specified with an allowable error and intended to prevent accurate or absolute numerical values disclosed for understanding of the present invention from being illegally or unfairly used by any unconscionable third party.

Also, as used herein, when a layer or an element is mentioned to be formed "on" layers or elements, the layer or element may be directly formed on the layers or elements, or other layers or elements may be additionally formed between the layers, on a subject, or on a substrate.

In addition, in the present disclosure, the (co)polymer is meant to include both a homo-polymer and a co-polymer.

Unless otherwise defined herein, "copolymerization" may mean block copolymerization, random copolymerization, graft copolymerization or alternating copolymerization, and "copolymer" means block copolymer, random copolymer, graft copolymer or alternating copolymer.

In addition, "part by weight" as used herein refers to a relative concept of a ratio of the weight of the remaining material based on the weight of a specific material. For example, in a mixture containing 50 g of material A, 20 g of material B, and 30 g of material C, the amounts of material B and C based on 100 parts by weight of material A are 40 parts by weight and 60 parts by weight, respectively.

Meanwhile, "wt% (% by weight)" refers to an absolute concept of expressing the weight of a specific material in percentage based on the total weight. In the above-described mixture, the contents of material A, B and C based on 100% of the total weight of the mixture are 50 wt %, 20 wt % and 30 wt %, respectively.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the present invention will be described in detail.

According to one aspect of the present disclosure, there is provided an organic-inorganic hybrid polyolefin composite capable of solving the mixing and dispersing problem of inorganic materials and olefin polymers and the migration problem while controlling functions such as mechanical properties, wettability, dimensional stability, shutdown, low thermal shrinkage, etc., when manufacturing a Li-ion battery separator (LiBS).

Especially, the organic-inorganic hybrid polyolefin composite includes a polyolefin and a non-porous inorganic material bonded to at least a portion of the polyolefin, and a content of the non-porous inorganic material is 0.4 wt% or more, or 0.4 wt% to 12 wt% based on the total weight of the organic-inorganic hybrid polyolefin composite.

Specifically, the polyolefin may be a homopolymer or a copolymer of an olefin monomer selected from the group consisting of ethylene, propylene, 1-butene, 1-pentene, 1-hexene, 4-methyl-1-pentene, 1-octene, 1-decene, 1-dodecene, 1-tetradecene, 1-hexadecene, 1-octadecene, and 1-eicosene. For example, it may be a homopolymer of an olefin monomer such as a homopolymer of ethylene or propylene, that is, polyethylene or polypropylene. More preferably, it may be polyethylene.

In addition, the polyethylene includes low-density polyethylene (LDPE), linear low-density polyethylene (LLDPE), high-density polyethylene (HDPE), and the like, and may be one or a mixture of two or more of them. In particular, the polyethylene is preferably high-density polyethylene having a high crystallinity and a high melting point of the resin. However, if necessary, the polyethylene may be a blend of high-density polyethylene and low-density polyethylene.

The organic-inorganic hybrid polyolefin composite of the present disclosure includes a non-porous inorganic material bonded to at least a portion of the polyolefin together with the above-described polyolefin.

Specifically, the content of the non-porous inorganic material is 0.4 wt% or more based on the total weight of the organic-inorganic hybrid polyolefin composite. Preferably, the content of the non-porous inorganic material may be 0.42 wt% or more, 0.43 wt% or more, 0.44 wt% or more, 0.45 wt% or more, 0.46 wt% or more, 0.47 wt% or more, 0.48 wt% or more, 0.49 wt% or more, or 0.5 wt% or more. When the content of the non-porous inorganic material is less than 0.4 wt%, it does not play a role as a filler to which the polyolefin is bonded, and cannot compensate for the mechanical properties of the polyolefin. However, the content of the non-porous inorganic material may be 12 wt% or less in terms of preventing the mechanical properties of the organic-inorganic hybrid polyolefin composite from being deteriorated. Preferably, it may be 10 wt% or less, 9.8 wt% or less, 9.5 wt% or less, 9 wt% or less, 8.8 wt% or less, 8.6 wt% or less, 8.5 wt% or less, 8.4 wt% or less, 8.3 wt% or less, 8.2 wt% or less, 8.1 wt% or less, or 8 wt% or less. For example, when the content of the non-porous inorganic material is too excessive such as more than 12 wt %, it acts as an impurity rather than a filler in the organic-inorganic hybrid polyolefin composite, thereby preventing the formation of a polymer matrix and thus decreasing mechanical properties. Accordingly, the content of the non-porous inorganic material is preferably within the above-described range in terms of securing excellent mechanical properties of the organic-inorganic hybrid polyolefin composite to be prepared.

In particular, the inorganic material of the present disclosure may be a non-porous material having a smooth surface with no pores at all, or a material having some irregularities that cannot be regarded as pores on the surface. The non-porous inorganic material may have a specific surface area of 100 m²/g or less, or 2 m²/g to 100 m²/g. The specific surface area is a value calculated using a commonly known Brunauer-Emmett-Teller (BET) equation, and may be a value measured according to ISO 9277 of the International Organization for Standardization.

Specifically, the specific surface area of the non-porous inorganic material may be 95 m²/g or less, 85 m²/g or less, 80 m²/g or less, 70 m²/g or less, 60 m²/g or less, 55 m²/g or less, 50 m²/g or less, 45 m²/g or less, 40 m²/g or less, 35 m²/g or less, 30 m²/g or less, 25 m²/g or less, 20 m²/g or less, or 18 m²/g or less. In particular, the non-porous inorganic material may satisfy the specific surface area described above in terms of securing excellent mechanical properties while being included in the polyolefin composite within the above content range without being broken even in the olefin polymerization process. However, in consideration of practical pore properties of the inorganic material, the specific surface area may be 2 m²/g or more, 4 m²/g or more, 6 m²/g or more, 8 m²/g or more, 10 m²/g or more, or 12 m²/g or more.

In addition, the non-porous inorganic material may be fine particles having a size of 30 nm to 2 µm, specifically, a particle size of 50 nm or more, 60 nm or more, 70 nm or more, 80 nm or more, or 100 nm or more, and 1.8 µm or less, 1.5 µm or less, 1.2 µm or less, or 1.0 µm or less.

In addition, the non-porous inorganic material may have a uniform particle size, and a spherical or circular shape.

Specifically, the non-porous inorganic material may include one or more of a hydroxyl group or a siloxane group on the surface, and preferably, a hydroxyl group and a siloxane group having high reactivity on the surface. For example, the amount of hydroxyl groups on the surface of the inorganic material is preferably about 0.1 mmol/g to about 10 mmol/g, more preferably about 0.5 mmol/g to about 5 mmol/g.

In addition, the non-porous inorganic material may be one or a mixture of two or more selected from the group consisting of alumina, magnesia, zirconia, zeolite, and silica. For example, the non-porous inorganic material may be silica, silica-alumina, or silica-magnesia, and preferably silica.

For example, when the non-porous inorganic material is silica, it may be synthesized by the Stover method (Stober, W. and A. Fink, Bohn, Journal of Colloid and Interface Science, 1968, 26, 62). According to this method, silica nanoparticles are formed as tetraethyl orthosilicate (TEOS), a silica precursor, is hydrolyzed in an aqueous-alkaline solvent to which an alkaline catalyst is added. Herein, aqueous ammonia (NH₃), sodium hydroxide (NaOH), etc. can be used as the catalyst.

In addition, in the organic-inorganic hybrid polyolefin composite of the present disclosure, the non-porous inorganic material is chemically bonded to at least a portion of the above-described polyolefin. Specifically, at least one chemical bond of a covalent bond and a coordinate bond may be formed. Herein, the covalent bond refers to a bond formed when two atoms share a pair of electrons, and the coordination bond refers to a bond formed by sharing a lone pair of electrons of one atom with the other atom.

Specifically, the above-described chemical bond may be formed through a substituent such as a hydroxyl group or a siloxane group present on the surface of the non-porous inorganic material.

In the organic-inorganic hybrid polyolefin composite of the present disclosure, the non-porous inorganic material may be directly bonded to at least a portion of the above-described polyolefin or bonded through at least one of a catalytically active component and a cocatalyst derived from a polymerization process. For example, the non-porous inorganic material may form a chemical bond with at least one of the catalytically active component and the cocatalyst through a substituent such as a hydroxyl group or a siloxane group present on the surface, and then may form a chemical bond directly with at least a portion of the above-described polyolefin. For example, in the organic-inorganic hybrid polyolefin composite, a chemical bond may be formed with a cocatalyst on the surface of the non-porous inorganic material, a chemical bond may be formed between the cocatalyst and the catalytically active component, and a covalent bond may be formed through a coordination bond and a polymerization reaction between the catalytically active component and an olefin monomer such as ethylene.

On the other hand, the organic-inorganic hybrid polyolefin composite is not very important as long as it can be molded into a sheet, but for applications requiring strong physical properties such as a Li-ion battery separator (LiBS), a high molecular weight is preferable. In this aspect, the organic-inorganic hybrid polyolefin composite may have a weight average molecular weight of about 300,000 g/mol or more, or about 300,000 g/mol to about 1,500,000 g/mol. More preferably, the weight average molecular weight of the organic-inorganic hybrid polyolefin composite may be about 300,500 g/mol or more, about 300,800 g/mol or more, about 301,000 g/mol or more, or about 301,300 g/mol or more. However, in terms of practical processability such as molding into a sheet, the weight average molecular weight of the organic-inorganic hybrid polyolefin composite may be about 1,400,000 g/mol or less, about 1,250,000 g/mol or less, about 1,100,000 g/mol or less, about 1,000,000 g/mol or less, about 800,000 g/mol or less, about 600,000 g/mol or less, or about 500,000 g/mol or less.

In addition, the number average molecular weight of the organic-inorganic hybrid polyolefin composite may be about 85,000 g/mol or more, or about 85,000 g/mol to about 150,000 g/mol, and preferably about 86,000 g/mol or more, about 86,500 g/mol mol or more, about 87,000 g/mol or more, or 87,500 g/mol or more. In addition, the number average molecular weight of the organic-inorganic hybrid polyolefin composite may be about 140,000 g/mol or less, about 125,000 g/mol or less, about 110,000 g/mol or less, about 105,000 g/mol or less, about 100,000 g/mol or less, about 98,000 g/mol or less, or about 95,000 g/mol or less.

In addition, the organic-inorganic hybrid polyolefin composite may have a molecular weight distribution (Mw/Mn) of 2.5 to 4.5, specifically 2.7 or more, 2.85 or more, 3 or more, or 3.2 or more, and 4.3 or less, 4.0 or less, 3.8 or less, or 3.5 or less. In particular, when preparing the organic-inorganic hybrid polyolefin composite as a Li-ion battery separator (LiBS), it is preferable to maintain the molecular weight distribution within the above-described range in terms of securing excellent mechanical properties.

The weight average molecular weight, number average molecular weight, and molecular weight distribution of the organic-inorganic hybrid polyolefin composite may be a weight average molecular weight, a number average molecular weight, and a molecular weight distribution converted with polystyrene measured by the GPC method.

For example, the weight average molecular weight (Mw) and the number average molecular weight (Mn) of the organic-inorganic hybrid polyolefin composite can be measured using gel permeation chromatography (GPC), and may be calculated by a polystyrene conversion method as described below. In addition, the molecular weight distribution (Mw/Mn) of the organic-inorganic hybrid polyolefin composite can be obtained by dividing the weight average molecular weight by the number average molecular weight.

Specifically, PL-GPC220 manufactured by Waters may be used as the gel permeation chromatography (GPC) instrument, and a Polymer Laboratories PLgel MIX-B 300 mm length column may be used. An evaluation temperature may be 160 °C, and 1,2,4-trichlorobenzene may be used for a solvent at a flow rate of 1 mL/min. Each organic-inorganic hybrid polyolefin composite sample may be pretreated by dissolving in 1,2,4-trichlorobenzene containing 0.0125% of BHT at 160 °C for 10 hours using a GPC analyzer (PL-GP220), and the sample with a concentration of 10 mg/10 mL may be supplied in an amount of 200 µL. Mw and Mn may be obtained using a calibration curve formed using a polystyrene standard. 9 kinds of the polystyrene standard may be used with the molecular weight of 2000 g/mol, 10000 g/mol, 30000 g/mol, 70000 g/mol, 200000 g/mol, 700000 g/mol, 2000000 g/mol, 4000000 g/mol, and 10000000 g/mol.

Meanwhile, the organic-inorganic hybrid polyolefin composite may have Young's modulus of about 250 MPa or more, about 280 MPa or more, about 285 MPa or more, or about 290 MPa or more, about 295 MPa or more, about 300 MPa or more, or about 305 MPa or more, when measured according to ASTM D 638 of the American Society for Testing and Materials. In addition, the Young's modulus may be about 800 MPa or less, about 750 MPa or less, about 700 MPa or less, about 650 MPa or less, about 600 MPa or less, about 550 MPa or less, or about 500 MPa or less. In particular, for applications requiring strong physical properties such as a Li-ion battery separator (LiBS), it is preferable that the organic-inorganic hybrid polyolefin composite has high Young's modulus. In this aspect, the Young's modulus may be 285 MPa or more, 290 MPa or more, 295 MPa or more, 300 MPa or more, or 305 MPa or more.

In addition, the organic-inorganic hybrid polyolefin composite may have wettability, that is, a water contact angle (Degree, °) of 45 ° or less, or 15 ° to 45 °, measured according to ASTM D 5946 of the American Society for Testing and Materials. Preferably, the water contact angle may be 44 ° or less, 43 ° or less, 42 ° or less, or 40 ° or less. The organic-inorganic hybrid polyolefin composite, as described above, has a low contact angle, which means good wettability to water, and has the advantage that the electrolyte can easily penetrate when applied to a Li-ion battery separator (LiBS). In terms of the wettability, the lower water contact angle is better. However, it may be 18 ° or more, 20 ° or more, 25 ° or more, or 30 ° or more depending on water repellency characteristics of the polymer membrane itself.

In addition, the organic-inorganic hybrid polyolefin composite may have excellent dimensional stability with a thermal shrinkage (90 °C, 60 min) of 5% or less, or 3% or less. For example, a film specimen is prepared using the organic-inorganic hybrid polyolefin composite according to ASTM D 5946 of the American Society for Testing and Materials. Then, when the film specimen is left at 140 °C for 1 hour and the area is measured before and after leaving, the area after leaving the film specimen may be 95% or more, 96% or more, or 97% or more of the area before leaving.

According to another embodiment of the present disclosure, there is provided a preparation method of the above-described organic-inorganic hybrid polyolefin composite.

In particular, in the present disclosure, when manufacturing a Li-ion battery separator (LiBS), the olefin polymer is prepared after bonding a catalyst to an inorganic material. In this way, the mixing and dispersing problem of inorganic materials and olefin polymers and the migration problem can be solved, and it is possible to prepare an organic-inorganic hybrid polyolefin composite capable of controlling functions such as mechanical properties, wettability, dimensional stability, shutdown, low thermal shrinkage, etc., depending on the content of inorganic materials.

The method of preparing the organic-inorganic hybrid polyolefin composite of the present disclosure includes the step of polymerizing an olefin monomer in the presence of a catalyst composition in which a catalytically active component comprising at least one first metallocene compound represented by the following Chemical Formula 1; and at least one second metallocene compound selected from compounds represented by the following Chemical Formula 2 is bonded to a non-porous inorganic material.

[Chemical Formula 1] (Cp¹R^{a})ₙ(Cp²R^{b})M¹Q¹₃₋ₙ

in Chemical Formula 1,
M¹ is a Group 4 transition metal;
Cp¹ and Cp² are the same as or different from each other, and are each independently any one selected from the group consisting of cyclopentadienyl, indenyl, 4,5,6,7-tetrahydro-1-indenyl, and fluorenyl radicals; wherein they are unsubstituted or substituted with C₁₋₂₀ hydrocarbon;
R^{a} and R^{b} are the same as or different from each other, and are each independently hydrogen, C₁₋₂₀ alkyl, C₁₋₂₀ alkoxy, C₂₋₂₀ alkoxyalkyl, C₆₋₂₀ aryl, C₆₋₂₀ aryloxy, C₂₋₂₀ alkenyl, C₇₋₄₀ alkylaryl, C₇₋₄₀ arylalkyl, C₈₋₄₀ arylalkenyl, or C₂₋₁₀ alkynyl, provided that at least one of R^{a} and R^{b} is not hydrogen;
Q¹ is halogen, C₁₋₂₀ alkyl, C₂₋₂₀ alkenyl, C₇₋₄₀ alkylaryl, C₇₋₄₀ arylalkyl, C₆₋₂₀ aryl, substituted or unsubstituted C₁₋₂₀ alkylidene, a substituted or unsubstituted amino group, C₂₋₂₀ alkoxyalkyl, C₂₋₂₀ alkylalkoxy, or C₇₋₄₀ arylalkoxy; and
n is 1 or 0; 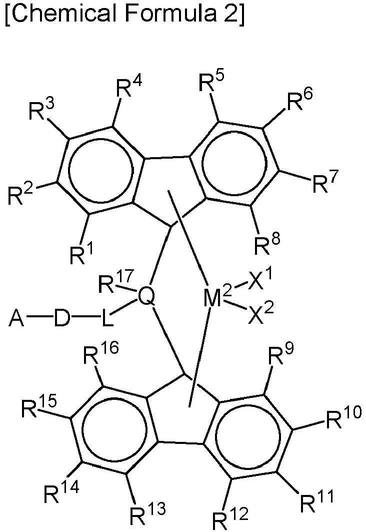
in Chemical Formula 2,
R' to R¹⁷ are the same as or different from each other, and are each independently hydrogen, halogen, C₁₋₂₀ alkyl, C₂₋₂₀ alkenyl, C₆₋₂₀ aryl, C₇₋₂₀ alkylaryl, or C₇₋₂₀ arylalkyl;
L is C₁₋₁₀ linear or branched alkylene;
D is -O-, -S-, -N(R)- or -Si(R)(R')-, wherein R and R' are the same as or different from each other, and are each independently hydrogen, halogen, C₁₋₂₀ alkyl, C₂₋₂₀ alkenyl, or C₆₋₂₀ aryl;
A is hydrogen, halogen, C₁₋₂₀ alkyl, C₂₋₂₀ alkenyl, C₆₋₂₀ aryl, C₇₋₂₀ alkylaryl, C₇₋₂₀ arylalkyl, C₁₋₂₀ alkoxy, C₂₋₂₀ alkoxyalkyl, C₂₋₂₀ heterocyclo alkyl, or C₅₋₂₀ heteroaryl;
Q is carbon, silicon or germanium;
M² is a Group 4 transition metal; and
X¹ and X² are the same as or different from each other, and are each independently halogen, C₁₋₂₀alkyl, C₂₋₂₀ alkenyl, C₆₋₂₀ aryl, a nitro group, an amido group, C₁₋₂₀ alkylsilyl, C₁₋₂₀ alkoxy, or a C₁₋₂₀ sulfonate group.

The substituents are described in more detail as follows.

The hydrocarbyl group is a monovalent functional group in a hydrogen-removed form from a hydrocarbon, and may include an alkyl group, an alkenyl group, an alkynyl group, an aryl group, an aralkyl group, an aralkenyl group, an aralkynyl group, an alkylaryl group, an alkenylaryl group, an alkynylaryl group, and the like. The C₁₋₃₀ hydrocarbyl group may be a C₁₋₂₀ or C₁₋₁₀ hydrocarbyl group. For example, the hydrocarbyl group may be a linear, branched or cyclic alkyl. More specifically, the C₁₋₃₀ hydrocarbyl group may be a linear, branched or cyclic alkyl group such as a methyl group, an ethyl group, an n-propyl group, an iso-propyl group, an n-butyl group, an iso-butyl group, a tert-butyl group, an n-pentyl group, an n- hexyl group, an n-heptyl group and a cyclohexyl group; or an aryl group such as phenyl, biphenyl, naphthyl, anthracenyl, phenanthrenyl, or fluorenyl. Moreover, it may be alkylaryl such as methylphenyl, ethylphenyl, methylbiphenyl, and methylnaphthyl, or arylalkyl such as phenylmethyl, phenylethyl, biphenylmethyl, and naphthylmethyl. It may also be alkenyl such as allyl, ethenyl, propenyl, butenyl, and pentenyl.

The hydrocarbyloxy group is a functional group in which the hydrocarbyl group is bonded to oxygen. Specifically, the C₁₋₃₀ hydrocarbyloxy group may be a C₁₋₂₀ or C₁₋₁₀ hydrocarbyloxy group. For example, the hydrocarbyloxy group may be a linear, branched or cyclic alkyl. More specifically, the C₁₋₃₀ hydrocarbyloxy group may be a linear, branched or cyclic alkoxy group such as a methoxy group, an ethoxy group, an n-propoxy group, an iso-propoxy group, an n-butoxy group, an iso-butoxy group, a tert-butoxy group, an n-pentoxy group, an n-hexyloxy group, an n-heptoxy group and a cyclohexyloxy group; or an aryloxy group such as a phenoxy group and a naphthalenoxy group.

The hydrocarbyloxyhydrocarbyl group is a functional group in which at least one hydrogen of the hydrocarbyl group is substituted with at least one hydrocarbyloxy group. Specifically, the C₂₋₃₀ hydrocarbyloxyhydrocarbyl group may be a C₂₋₂₀ or C₂₋₁₅ hydrocarbyloxyhydrocarbyl group. For example, the hydrocarbyloxyhydrocarbyl group may be a linear, branched or cyclic alkyl. More specifically, the C₂₋₃₀ hydrocarbyloxyhydrocarbyl group may be an alkoxyalkyl group such as a methoxymethyl group, a methoxyethyl group, an ethoxymethyl group, an iso-propoxymethyl group, an iso-propoxyethyl group, an iso-propoxyhexyl group, a tert-butoxymethyl group, a tert-butoxyethyl group and a tert-butoxyhexyl group; or an aryloxyalkyl group such as a phenoxyhexyl group.

The hydrocarbyl(oxy)silyl group is a functional group in which one to three hydrogens of -SiH₃ are substituted with one to three hydrocarbyl or hydrocarbyloxy groups. Specifically, the C₁₋₃₀ hydrocarbyl(oxy)silyl group may be a C₁₋₂₀, C₁₋₁₅, C₁₋₁₀, or C₁₋₅ hydrocarbyl(oxy)silyl group. More specifically, the C₁₋₃₀ hydrocarbyl(oxy)silyl group may be an alkylsilyl group such as a methylsilyl group, a dimethylsilyl group, a trimethylsilyl group, a dimethylethylsilyl group, a diethylmethylsilyl group, or a dimethylpropylsilyl group; an alkoxysilyl group such as a methoxysilyl group, a dimethoxysilyl group, a trimethoxysilyl group, or a dimethoxyethoxysilyl group; or an alkoxyalkylsilyl group such as a methoxydimethylsilyl group, a diethoxymethylsilyl group, or a dimethoxypropylsilyl group.

The C₁₋₂₀ silylhydrocarbyl group is a functional group in which at least one hydrogen of the hydrocarbyl group is substituted with a silyl group. The silyl group may be -SiH₃ or a hydrocarbyl(oxy)silyl group. Specifically, the C₁₋₂₀ silylhydrocarbyl group may be a C₁₋₁₅ or C₁₋₁₀ silylhydrocarbyl group. More specifically, C₁₋₂₀ silylhydrocarbyl group may be a silylalkyl group such as -CH₂-SiH₃; an alkylsilylalkyl group such as a methylsilylmethyl group, a methylsilylethyl group, a dimethylsilylmethyl group, a trimethylsilylmethyl group, a dimethylethylsilylmethyl group, a diethylmethylsilylmethyl group, or a dimethylpropylsilylmethyl group; or an alkoxysilylalkyl group such as a dimethylethoxysilylpropyl group.

The halogen may be fluorine (F), chlorine (Cl), bromine (Br) or iodine (I).

The C₁₋₂₀ alkyl may be linear, branched or cyclic alkyl. Specifically, the C₁₋₂₀ alkyl may be C₁₋₂₀ linear alkyl; C₁₋₁₅ linear alkyl; C₁₋₅ linear alkyl; C₃₋₂₀ branched or cyclic alkyl; C₃₋₁₅ branched or cyclic alkyl; or C₃₋₁₀ branched or cyclic alkyl. More specifically, the C₁₋₂₀ alkyl may be methyl, ethyl, propyl, isopropyl, n-butyl, tert-butyl, pentyl, hexyl, heptyl, octyl, cyclopropyl, cyclobutyl, cyclopentyl, cyclohexyl, cycloheptyl, cyclooctyl, or the like, but is not limited thereto.

The C₂₋₂₀ alkenyl may be linear, branched, or cyclic alkenyl. Specifically, it may be allyl, ethenyl, propenyl, butenyl, pentenyl, or the like, but is not limited thereto.

The C₁₋₂₀ alkoxy may be methoxy, ethoxy, isopropoxy, n-butoxy, tert-butoxy, cyclohexyloxy, or the like, but is not limited thereto.

The C₂₋₂₀ alkoxyalkyl group is a functional group in which at least one hydrogen of the above-mentioned alkyl is substituted with alkoxy, and it may be alkoxyalkyl such as methoxymethyl, methoxyethyl, ethoxymethyl, iso-propoxymethyl, iso-propoxyethyl, iso-propoxypropyl, iso-propoxyhexyl, tert-butoxymethyl, tert-butoxyethyl, tert-butoxypropyl, and tert-butoxyhexyl, but is not limited thereto.

The C₁₋₂₀ alkylsilyl or the C₁₋₂₀ alkoxysilyl is a functional group in which 1 to 3 hydrogens of -SiH₃ are substituted with 1 to 3 alkyl groups or alkoxy groups described above, and it may be alkylsilyl such as methylsilyl, dimethylsilyl, trimethylsilyl, dimethylethylsilyl, diethylmethylsilyl or dimethylpropylsilyl; alkoxysilyl such as methoxysilyl, dimethoxysilyl, trimethoxysilyl or dimethoxyethoxysilyl; or alkoxyalkylsilyl such as methoxydimethylsilyl, diethoxymethylsilyl or dimethoxypropylsilyl; or the like, but is not limited thereto.

The C₁₋₂₀ silylalkyl is a functional group in which at least one hydrogen of the above-mentioned alkyl is substituted with silyl, and it may be -CH₂-SiH₃, methylsilylmethyl or dimethylethoxysilylpropyl, or the like, but is not limited thereto.

In addition, the C₁₋₂₀ alkylene or alkylidene is the same as the above-mentioned alkyl except that it is a divalent substituent, and it may be methylene, ethylene, propylene, butylene, pentylene, hexylene, heptylene, octylene, cyclopropylene, cyclobutylene, cyclopentylene, cyclohexylene, cycloheptylene, cyclooctylene, or the like, but is not limited thereto.

The C₆₋₂₀ aryl may be a monocyclic, bicyclic or tricyclic aromatic hydrocarbon. For example, the C₆₋₂₀ aryl may be phenyl, biphenyl, naphthyl, anthracenyl, phenanthrenyl, fluorenyl, or the like, but is not limited thereto.

The C₇₋₂₀ alkylaryl may refer to a substituent in which at least one hydrogen of the aromatic ring is substituted with the above-mentioned alkyl. For example, the C₇₋₂₀ alkylaryl may be methylphenyl, ethylphenyl, methylbiphenyl, methylnaphthyl, or the like, but is not limited thereto.

The C₇₋₂₀ arylalkyl may refer to a substituent in which at least one hydrogen of the alkyl is substituted with the above-mentioned aryl. For example, the C₇₋₂₀ arylalkyl may be phenylmethyl, phenylethyl, biphenylmethyl, naphthylmethyl, or the like, but is not limited thereto.

In addition, the C₆₋₂₀ arylene or alkylidene is the same as the above-mentioned aryl except that it is a divalent substituent, and it may be phenylene, biphenylene, naphthylene, anthracenylene, phenanthrenylene, fluorenylene, or the like, but is not limited thereto.

The C₆₋₄₀ aryloxy may be phenoxy, biphenoxy, naphthoxy, or the like, but is not limited thereto.

The C₇₋₄₀ aryloxyalkyl is a functional group in which one or more hydrogens of the above-mentioned alkyl are substituted with aryloxy, and it may be phenoxymethyl, phenoxyethyl, phenoxyhexyl, or the like, but is not limited thereto.

The Group 4 transition metal may be titanium (Ti), zirconium (Zr), hafnium (Hf), or rutherfordium (Rf), and may specifically be titanium (Ti), zirconium (Zr), or hafnium (Hf). More specifically, it may be zirconium (Zr), or hafnium (Hf), but the present disclosure is not limited thereto.

Further, the Group 13 element may be boron (B), aluminum (Al), gallium (Ga), indium (In), or thallium (Tl), and may specifically be boron (B) or aluminum (Al), but the present disclosure is not limited thereto.

The above-mentioned substituents may optionally be substituted with one or more substituents selected from the group consisting of a hydroxyl group; halogen; a hydrocarbyl group; a hydrocarbyloxy group; a hydrocarbyl group or a hydrocarbyloxy group containing at least one heteroatom of Group 14 to 16 heteroatoms; a silyl group; a hydrocarbyl(oxy)silyl group; a phosphine group; a phosphide group; a sulfonate group; and a sulfone group within the range of exhibiting the same or similar effect as the desired effect.

Meanwhile, in the preparation method of the organic-inorganic hybrid polyolefin composite of the present disclosure, the catalyst composition includes the first metallocene compound having low comonomer incorporation and the second metallocene compound having high comonomer incorporation during ethylene polymerization as catalytically active components, so that it exhibits high activity with excellent process stability for olefin polymerization. In addition, due to high bonding properties between the catalytically active components and the non-porous inorganic material, the catalyst composition is useful for preparing a polyolefin composite having excellent mechanical properties.

Specifically, in Chemical Formula 1, M¹ may be zirconium (Zr) or hafnium (Hf), and preferably zirconium (Zr).

In addition, in Chemical Formula 1, Cp¹ and Cp² may each be cyclopentadienyl, indenyl, or fluorenyl, and preferably, at least one of Cp¹ and Cp² is cyclopentadienyl or indenyl. More preferably, both Cp¹ and Cp² may be cyclopentadienyl.

Cp¹ and Cp² may be unsubstituted or substituted with at least one C₁₋₂₀ hydrocarbon. For example, Cp¹ and Cp² may be substituted with one or more of a C₁₋₁₀ hydrocarbyl group, a C₁₋₁₀ hydrocarbyloxy group, or a C₁₋₁₀ hydrocarbyloxyhydrocarbyl group. Specifically, they may be substituted with one or more of methyl, ethyl, n-propyl, n-butyl, tert-butyl, n-pentyl, n-hexyl, tert-butoxyhexyl, butenyl, phenylpropyl, phenylhexyl, or phenyl.

More specifically, in the first metallocene compound, Cp¹ and Cp² may be the same as or different from each other, and preferably, Cp¹ and Cp² are the same as each other and may include the same substituents to form a symmetric structure.

In addition, R^{a} and R^{b} may each be hydrogen, C₁₋₆ linear or branched alkyl, C₂₋₆ alkynyl, C₁₋₆ alkoxy-substituted C₁₋₆ alkyl, C₆₋₁₂ aryl-substituted C₁₋₆ alkyl, or C₆₋₁₂ aryl, provided that at least one of R^{a} and R^{b} is not hydrogen. In particular, R^{a} and R^{b} may be the same as or different from each other, and preferably, R^{a} and R^{b} may be the same as each other and may be in a form in which Chemical Formula 1 has a symmetrical structure. For example, R^{a} and R^{b} may each be hydrogen, methyl (Me), ethyl (Et), n-propyl (n-Pr), iso-propyl (i-Pr), n-butyl (n-Bu), tert-butyl (t-Bu), n-pentyl (n-Pt), n-hexyl (n-Hex), tert-butoxy (t-Bu-O) hexyl, butenyl, phenylpropyl, phenylhexyl, or phenyl (Ph). Preferably, at least one of R^{a} and R^{b} may be tert-butoxyhexyl, and the rest may be hydrogen, methyl (Me), ethyl (Et), n-propyl (n-Pr), iso-propyl (i-Pr), n-butyl (n-Bu), tert-butyl (t-Bu), n-pentyl (n-Pt), n-hexyl (n-Hex), tert-butoxy (t-Bu-O) hexyl, butenyl, phenylpropyl, phenylhexyl, or phenyl (Ph). More preferably, at least one of R^{a} and R^{b} may be tert-butoxyhexyl, and the rest may be hydrogen.

And, in Chemical Formula 1, each Q¹ may be halogen, and specifically chlorine.

In Chemical Formula 1, n is 1 or 0, and preferably 1.

Meanwhile, the first metallocene compound may be represented by any one of the following Chemical Formulae 1-1 to 1-5.

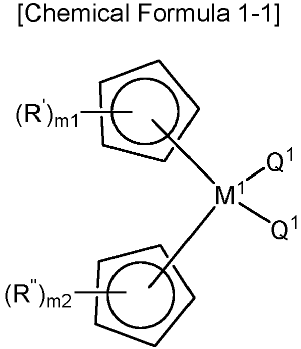

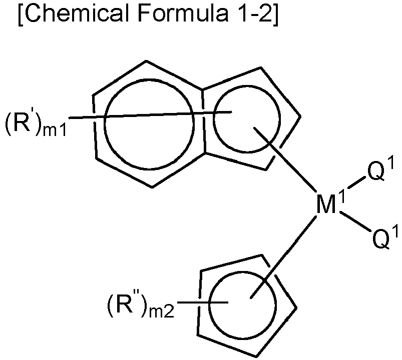

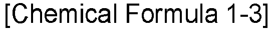

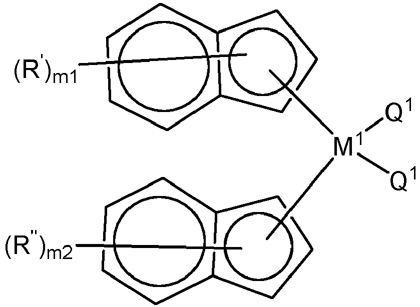

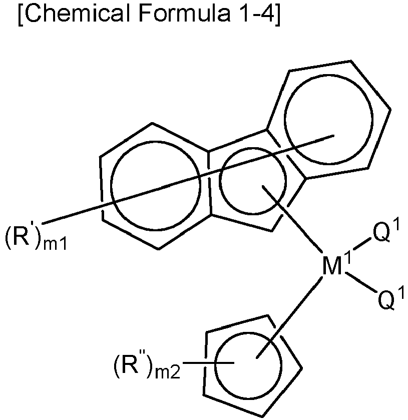

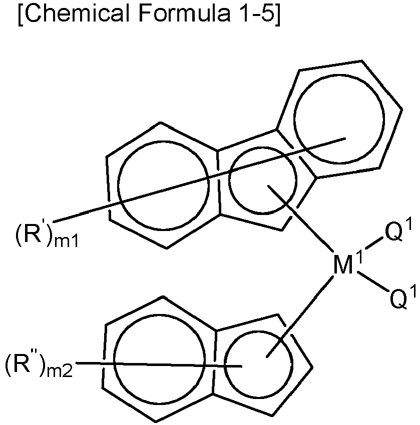

In Chemical Formulae 1-1 to 1-5, M¹ and Q¹ are as defined in Chemical Formula 1,
R' and R" are the same as or different from each other, and are each independently hydrogen, C₁₋₂₀ alkyl, C₁₋₂₀ alkoxy, C₂₋₂₀ alkoxyalkyl, C₆₋₂₀ aryl, C₆₋₂₀ aryloxy, C₂₋₂₀ alkenyl, C₇₋₄₀ alkylaryl, C₇₋₄₀ arylalkyl, C₈₋₄₀ arylalkenyl, or C₂₋₁₀ alkynyl, provided that at least one of R' and R" is not hydrogen;
each m1 is independently an integer of 1 to 8; and
each m2 is independently an integer of 1 to 6.

More preferably, the first metallocene compound may be represented by Chemical Formula 1-1.

And, in Chemical Formulae 1-1 to 1-5, R' and R" may each be hydrogen, C₁₋₆ linear or branched alkyl, C₂₋₆ alkynyl, C₁₋₆ alkoxy-substituted C₁₋₆ alkyl, C₆₋₁₂ aryl-substituted C₁₋₆ alkyl, or C₆₋₁₂ aryl, provided that at least one of R' and R" is not hydrogen. Specifically, at least one of R' and R" may be methyl (Me), ethyl (Et), n-propyl (n-Pr), iso-propyl (i-Pr), n-butyl (n-Bu), tert-butyl (t-Bu), n-pentyl (n-Pt), n-hexyl (n-Hex), tert-butoxy (t-Bu-O) hexyl, butenyl, phenylpropyl, phenylhexyl, or phenyl (Ph), and the rest may be hydrogen. More specifically, at least one of R' and R" may be tert-butoxy(t-Bu-O) hexyl, and the rest may be hydrogen.

And, in Chemical Formulae 1-1 to 1-5, each of m1 and m2 is an integer of 1 to 4, and preferably 1 or 2.

Specifically, the first metallocene compound may be represented by one of the following structural formulae.

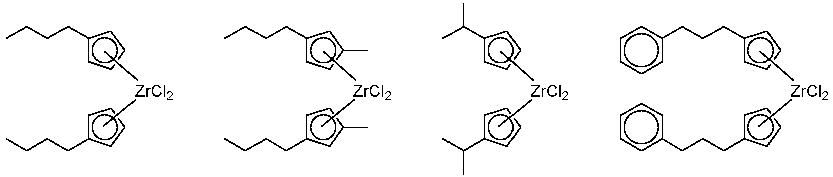

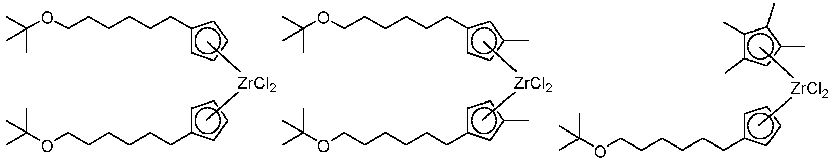

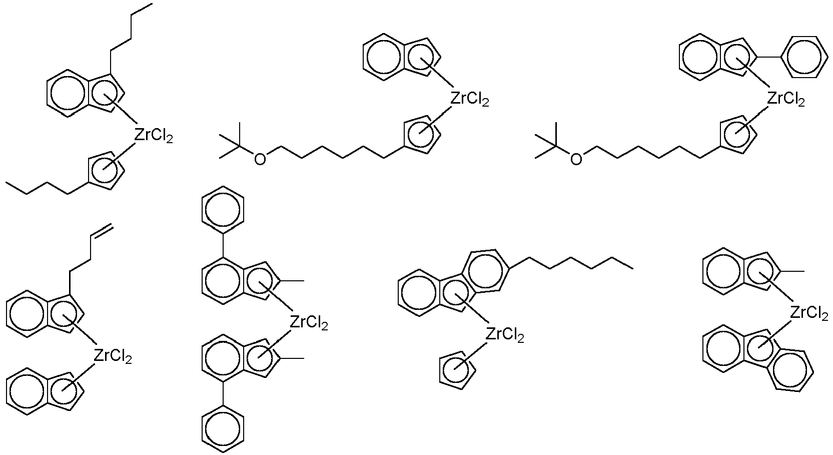

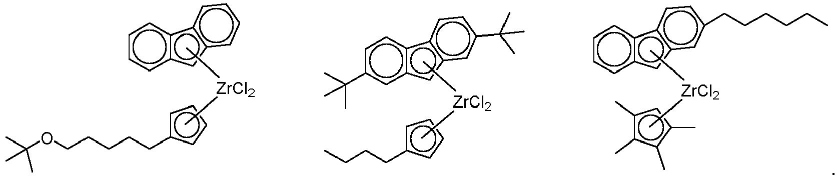

The first metallocene compound represented by the above structural formulae may be synthesized by applying known reactions, and a more detailed synthesis method is described in Examples.

Meanwhile, in the preparation method of an organic-inorganic hybrid polyolefin composite of the present disclosure, the catalyst composition includes the second metallocene compound represented by the Chemical Formula 2 together with the first metallocene compound described above.

Specifically, in Chemical Formula 2, M² may be zirconium (Zr) or hafnium (Hf), and preferably zirconium (Zr). Also, Q may be silicon (Si).

In addition, R' to R¹⁷ may each be hydrogen, C₁₋₈ alkyl, C₂₋₈ alkenyl, or C₆₋₁₂ aryl, and preferably be methyl, ethyl, propyl, isopropyl, n-butyl, tert-butyl, pentyl, hexyl, heptyl, octyl, or phenyl, but the present disclosure is not limited thereto. Specifically, R' to R¹⁶ may be hydrogen, or C₁₋₈ alkyl, C₁₋₅ alkyl, or C₁₋₃ alkyl, and R¹⁷ may be C₁₋₈ alkyl, C₁₋₅ alkyl, or C₁₋₃ alkyl. More specifically, R' to R¹⁶ may be hydrogen, and R¹⁷ may be methyl.

In addition, L is more preferably C₄₋₈ linear or branched alkylene, but is not limited thereto. In addition, the alkylene group may be unsubstituted or substituted with C₁₋₂₀ alkyl, C₂₋₂₀ alkenyl, or C₆₋₂₀ aryl. Specifically, L may be C₅₋₇ linear or branched alkylene. Preferably, L may be hexylene.

And, D may be -O-.

In addition, A may be hydrogen, C₁₋₆ alkyl, C₁₋₆ alkoxy, C₂₋₁₂ alkoxyalkyl, or C₅₋₁₂ heteroaryl, but is not limited thereto. Specifically, A may be hydrogen, a methyl group, an ethyl group, a propyl group, an isopropyl group, a n-butyl group, a tert-butyl group, a methoxymethyl group, a tert-butoxymethyl group, a 1-ethoxyethyl group, a 1-methyl-1-methoxyethyl group, a tetrahydropyranyl group, or a tetrahydrofuranyl group. Preferably, A may be a tert-butyl group.

In addition, each of X¹ and X² may be halogen. For example, it may be chlorine (Cl), bromine (Br), or iodine (I), and preferably chlorine (Cl).

Specifically, the compound represented by Chemical Formula 2 may be, for example, a compound represented by the following structural formula, but is not limited thereto.

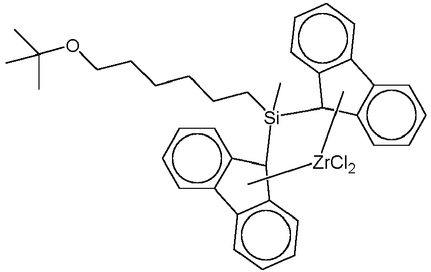

The second metallocene compound represented by the above structural formulae may be synthesized by applying known reactions, and a more detailed synthesis method is described in Examples.

In the catalyst composition of the present disclosure, the first metallocene compound to the second metallocene compound may be included in a molar ratio of about 1:9 to about 9:1. When including the first and second metallocene compounds in the above-described molar ratio, excellent supporting performance, catalytic activity, and high comonomer incorporation may be exhibited. In particular, when polyolefin is prepared in a slurry process under such a catalyst composition catalyst, process stability is improved, and a fouling problem that has occurred in the past can be prevented. Particularly, when the supporting ratio of the first metallocene compound to the second metallocene compound exceeds about 9:1, only the first metallocene compound plays a dominant role, and comonomer incorporation may decrease. In addition, when the supporting ratio is less than about 1:9, only the second metallocene compound plays a dominant role, and it may be difficult to reproduce the desired molecular structure of the polymer.

Specifically, it is preferable that the catalyst composition includes the first metallocene compound and the second metallocene compound in a molar ratio of about 1:5 to about 5:1, or in a molar ratio of about 1:4 to about 4:1, about 1:3 to about 3:1, about 1:1.5 to about 2.8:1, about 1:1.8 to about 2.6:1, about 1:2 to about 2.5:1, about 1:2 to about 2.4:1, or about 1:21 to about 2.3:1 to produce a polyolefin with improved mechanical properties due to excellent comonomer incorporation while exhibiting high activity in polyolefin polymerization. More specifically, the molar ratio of the first metallocene compound and the second metallocene compound may be about 1:2 to about 2.5:1, more preferably about 1:2 to about 2.4:1, or about 1:21 to about 2.3:1.

That is, in the case of the catalyst composition including the first metallocene compound and the second metallocene compound within the above molar ratio, film properties of the polyolefin may be further improved due to the interaction of two or more catalysts.

Meanwhile, the preparation method of the organic-inorganic hybrid polyolefin composite of the present disclosure is characterized in that the olefin monomer is polymerized in the presence of a catalyst composition in which a catalytically active component including at least one first metallocene compound and at least one second metallocene compound to be described below is bonded to a non-porous inorganic material, wherein the content of the non-porous inorganic material is about 0.4 wt% or more, or about 0.4 wt% to about 12 wt% based on the total weight of the organic-inorganic hybrid polyolefin composite.

The content of the non-porous inorganic material can be adjusted by varying the content ratio of the non-porous inorganic material used in the catalyst composition and the olefin monomer added in the polymerization process, or by varying the ratio of the polyolefin produced according to the polymerization conditions. For example, even when the content of the non-porous inorganic material in the catalyst composition and the content of the olefin monomer in the polymerization process are the same, the content of the non-porous inorganic material based on the total weight of the organic-inorganic hybrid polyolefin composite to be prepared may be optimized within the above-described range by varing the temperature, pressure, and reaction time, which are polymerization conditions.

Specifically, the non-porous inorganic material is included in an amount of about 0.4 wt% or more, preferably about 0.42 wt% or more, about 0.43 wt% or more, about 0.44 wt% or more, about 0.45 wt% or more, about 0.46 wt% or more, about 0.47 wt% or more, about 0.48 wt% or more, about 0.49 wt% or more, or about 0.5 wt% or more based on a total weight of the olefin monomer and the non-porous inorganic material, catalytically active component, and cocatalyst, etc. included in the catalyst composition. When the content of the non-porous inorganic material is less than 0.4 wt%, it does not play a role as a filler to which the polyolefin is bonded, and cannot compensate for the mechanical properties of the polyolefin. However, the content of the non-porous inorganic material may be about 12 wt% or less, preferably about 10 wt% or less, about 9.8 wt% or less, about 9.5 wt% or less, about 9 wt% or less, about 8.8 wt% or less, about 8.6 wt% or less, about 8.5 wt% or less, about 8.4 wt% or less, about 8.3 wt% or less, about 8.2 wt% or less, about 8.1 wt% or less, or about 8 wt% or less based on a total weight of the olefin monomer and the inorganic material in terms of preventing the mechanical properties of the organic-inorganic hybrid polyolefin composite from being deteriorated. For example, when the content of the non-porous inorganic material is too excessive such as more than about 12 wt %, it acts as an impurity rather than a filler in the organic-inorganic hybrid polyolefin composite, thereby preventing the formation of a polymer matrix and thus decreasing mechanical properties. Accordingly, the content of the non-porous inorganic material is preferably included in the above-described range in terms of securing excellent mechanical properties of the organic-inorganic hybrid polyolefin composite to be prepared.

In particular, the inorganic material of the present disclosure may be a non-porous material having a smooth surface with no pores at all, or a material having some irregularities that cannot be regarded as pores on the surface. The properties of the non-porous inorganic material are the same as those described above in relation to the organic-inorganic hybrid polyolefin composite, and detailed descriptions thereof will be omitted.

In addition, in the catalyst composition of the present disclosure, a total amount of the catalytically active component including at least one first metallocene compound and at least one second metallocene compound may be 0.001 mmol/g or more, 0.003 mmol/g or more, 0.005 mmol/g or more, or 0.008 mmol/g or more, and 1 mmol/g or less, 0.99 mmol/g or less, 0.98 mmol/g or less, or 0.95 mmol/g or less based on 1 g of the above-described non-porous inorganic material. That is, it is preferable to control the total amount of the catalytically active component to fall within the above-described range in consideration of the contribution of the catalyst by the metallocene compound.

Meanwhile, the bonding of the catalytically active component and the inorganic material can be confirmed from the ICP analysis result of transition metal, which is 0.1 ppm or less, or 0.01 ppm or less. Herein, the ICP analysis is performed on the filtrate obtained in the filtering process to finally obtain a solid catalyst composition during the preparation of the catalyst composition.

In the preparation method of an organic-inorganic hybrid polyolefin composite of the present disclosure, the catalyst composition may include a cocatalyst compound together with a catalytically active component and an inorganic material including at least one first metallocene compound and at least one second metallocene compound. The cocatalyst may be any cocatalyst which is used for polymerization of olefins in the presence of a general metallocene catalyst. This cocatalyst enables bonding between the hydroxyl group in the inorganic material and the Group 13 transition metal. In addition, since the cocatalyst is present only on the surface of the inorganic material, it can contribute to achieving intrinsic properties of the catalyst composition of the present disclosure without a fouling phenomenon in which polymer particles are agglomerated to the reactor wall or with each other.

In addition, the catalyst composition of the present disclosure may further include at least one cocatalyst selected from the group consisting of compounds represented by the following Chemical Formulae 3 to 5.

[Chemical Formula 3] -[Al(R³¹)-O]_{c}-

in Chemical Formula 3,
R³¹ are each independently halogen, C₁₋₂₀ alkyl, or C₁₋₂₀ haloalkyl, and
c is an integer of 2 or more;

   [Chemical Formula 4] D(R⁴¹)₃
in Chemical Formula 4,
D is aluminum or boron, and
R⁴¹ are each independently hydrogen, halogen, C₁₋₂₀ hydrocarbyl or C₁₋₂₀ hydrocarbyl substituted with halogen,

   [Chemical Formula 5] [L-H]⁺[Q(E)₄]⁻ or [L]⁺[Q(E)₄]⁻
in Chemical Formula 5,
L is a neutral or cationic Lewis base;
Q is Br³⁺ or Al³⁺, and
E are each independently C₆₋₄₀ aryl or C₁₋₂₀ alkyl, unsubstituted or substituted with a substituent selected from the group consisting of halogen, C₁₋₂₀ alkyl, C₁₋₂₀ alkoxy, and C₆₋₄₀ aryloxy.

Specifically, in Chemical Formula 5, [L-H]⁺ is a bronsted acid.

The compound represented by Chemical Formula 3 may be alkylaluminoxane such as methyl aluminoxane (MAO), modified methyl aluminoxane (MMAO), ethylaluminoxane, isobutylaluminoxane, butylaluminoxane, or the like.

The alkyl metal compound represented by Chemical Formula 4 may be trimethylaluminum, triethylaluminum, triisobutylaluminum, tripropylaluminum, tributylaluminum, dimethylchloroaluminum, dimethylisobutylaluminum, dimethylethylaluminum, diethylchloroaluminum, triisopropylaluminum, tri-s-butylaluminum, tricyclopentylaluminum, tripentylaluminum, triisopentylaluminum, trihexylaluminum, ethyldimethylaluminum, methyldiethylaluminum, triphenylaluminum, tri-p-tolylaluminum, dimethylaluminummethoxide, dimethylaluminumethoxide, trimethylboron, triethylboron, triisobutylboron, tripropylboron, tributylboron, or the like.

The compound represented by Chemical Formula 5 may be triethylammonium tetraphenylboron, tributylammonium tetraphenylboron, trimethylammonium tetraphenylboron, tripropylammonium tetraphenylboron, trimethylammonium tetra(p-tolyl)boron, tripropylammonium tetra(p-tolyl)boron, triethylammonium tetra(o,p-dimethylphenyl)boron, trimethylammonium tetra(o,p-dimethylphenyl)boron, tributylammonium tetra(p-trifluoromethylphenyl)boron, trimethylammonium tetra(p-trifluoromethylphenyl)boron, tributylammonium tetrapentafluorophenylboron, N,N-dimethylanilinium tetraphenylboron, N,N-diethylanilinium tetraphenylboron, N,N-diethylanilinium tetrapentafluorophenylboron, diethylammonium tetrapentafluorophenylboron, triphenylphosphonium tetraphenyl boron, trimethylphosphonium tetraphenylboron, triethylammonium tetraphenylaluminum, tributylammonium tetraphenylaluminum, trimethylammonium tetraphenylaluminum, tripropylammonium tetraphenylaluminum, trimethylammonium tetra(p-tolyl)aluminum, tripropylammonium tetra(p-tolyl)aluminum, triethylammonium tetra(o,p-dimethylphenyl)aluminum, tributylammonium tetra(p-trifluoromethylphenyl)aluminum, trimethylammonium tetra(p-trifluoromethylphenyl)aluminum, tributylammonium tetrapentafluorophenylaluminum, N,N-diethylanilinium tetraphenylaluminum, N,N-diethylanilinium tetraphenylaluminum, N,N-diethylanilinium tetrapentafluorophenylaluminum, diethylammonium tetrapentafluorophenylaluminum, triphenylphosphonium tetraphenylaluminum, trimethylphosphonium tetraphenylaluminum, triphenylcarbonium tetraphenylboron, triphenylcarbonium tetraphenylaluminum, triphenylcarbonium tetra(p-trifluoromethylphenyl)boron, triphenylcarbonium tetrapentafluorophenylboron, or the like.

In addition, the catalyst composition may include the cocatalyst and the first metallocene compound in a molar ratio of about 1:1 to about 1:10000, preferably about 1:1 to about 1:1000, and more preferably about 1:10 to about 1:100.

In addition, the catalyst composition may include the cocatalyst and the second metallocene compound in a molar ratio of about 1:1 to about 1:10000, preferably about 1:1 to about 1:1000, and more preferably about 1:10 to about 1:100.

At this time, when the molar ratio is less than about 1, the metal content of the cocatalyst is too small, so catalytically active species are not well formed, resulting in low activity. When the molar ratio exceeds about 10000, the metal of the cocatalyst may act as a catalyst poison.

The cocatalyst may be supported in an amount of about 5 mmol to about 20 mmol based on 1 g of the inorganic material.

Meanwhile, the catalyst composition may be prepared by a method including the steps of supporting a cocatalyst on an inorganic material; supporting a first metallocene compound on the inorganic material on which the cocatalyst is supported; and supporting a second metallocene compound on the inorganic material on which the cocatalyst and the first metallocene compound are supported.

Alternatively, the catalyst composition may be prepared by a method including the steps of supporting a cocatalyst on an inorganic material; supporting a second metallocene compound on the inorganic material on which the cocatalyst is supported; and supporting a first metallocene compound on the inorganic material on which the cocatalyst and the second metallocene compound are supported.

Alternatively, the catalyst composition may be prepared by a method including the steps of supporting a first metallocene compound on an inorganic material; supporting a cocatalyst on the inorganic material on which the first metallocene compound is supported; and supporting a second metallocene compound on the inorganic material on which the cocatalyst and the first metallocene compound are supported.

In the above method, the supporting conditions are not particularly limited and the supporting step may be carried out within a range well known to those skilled in the art. For example, the supporting step may be carried out at a high temperature and at a low temperature appropriately. For example, the supporting temperature may be in a range of about -30 °C to about 150 °C, preferably in a range of about 50 °C to about 98 °C, or about 55 °C to about 95 °C. The supporting time may be appropriately controlled depending on the amount of the first metallocene compound to be supported. The reacted supported catalyst may be used without further treatment after the reaction solvent is removed through filtration or distillation under reduced pressure, or subjected to Soxhlet filtering using aromatic hydrocarbon such as toluene, if necessary.

The preparation of the supported catalyst may be carried out in the presence of a solvent or without a solvent. When the solvent is used, it may include aliphatic hydrocarbon solvents such as hexane or pentane, aromatic hydrocarbon solvents such as toluene or benzene, chlorinated hydrocarbon solvents such as dichloromethane, ether solvents such as diethylether or tetrahydrofuran (THF), and common organic solvents such as acetone or ethylacetate. It is preferable to use hexane, heptane, toluene, or dichloromethane. The solvent used herein is preferably used after removing a small amount of water or air, which may adversely affect the catalyst, by treating with a small amount of alkyl aluminum.

Meanwhile, the preparation method of the organic-inorganic hybrid polyolefin composite includes the step of polymerizing an olefin monomer in the presence of the above-described catalyst composition.

Specifically, the olefin monomer may be at least one selected from the group consisting of ethylene, propylene, 1-butene, 1-pentene, 1-hexene, 4-methyl-1-pentene, 1-octene, 1-decene, 1-dodecene, 1-tetradecene, 1-hexadecene, 1-octadecene, and 1-eicosene. Preferably, homopolymerization or copolymerization may be performed using ethylene or propylene.

For the polymerization reaction of the olefin monomer, various polymerization processes known as polymerization reactions of olefin monomers such as a continuous solution polymerization process, a bulk polymerization process, a suspension polymerization process, a slurry polymerization process, or an emulsion polymerization process may be used, and more specifically, the polymerization reaction may be carried out in a semi-batch reactor.

In addition, in the polymerization reactor of the polymerization reaction of the olefin monomer, the polymerization may proceed in the presence of an inert gas such as nitrogen. The inert gas may prolong the reaction activity of the metallocene compound included in the catalyst composition by inhibiting a rapid reaction of the metallocene compound, which is a catalytically active component, at the beginning of the polymerization reaction.

And, in the polymerization reaction, hydrogen gas may be used for the purpose of controlling the molecular weight and molecular weight distribution of the polyolefin.

The polymerization may be performed at a temperature of about 50 °C to about 110 °C, about 60 °C to about 105 °C, about 70 °C to about 100 °C, about 72 °C to about 90 °C, or about 75 °C to about 83 °C. When the polymerization temperature is too low, a polymerization rate and productivity may be reduced. Conversely, when the polymerization temperature is too high, a fouling phenomenon may occur in the reactor.

In addition, a polymerization pressure may be about 1 bar to about 100 bar, about 2 bar to about 80 bar, about 3 bar to about 50 bar, about 4 bar to about 40 bar, about 5 bar to about 30 bar, or about 8 bar to about 25 bar to achieve economic feasibility by securing optimum productivity. The polymerization pressure may be about 1 bar or more to prevent blocking due to excessive production of high molecular weight and to optimize productivity, and may be about 100 bar or less in consideration of a decrease in the polymerization reaction unit of the olefin monomer under high-pressure polymerization conditions.

In the preparation method of the organic-inorganic hybrid polyolefin composite according to the present disclosure, the polymerization time of the olefin monomer may vary depending on the temperature and pressure conditions as described above, and may vary depending on the amount of the olefin monomer for performing the polymerization reaction. However, the polymerization reaction is performed in a shorter time than the generally known polymerization of an olefin monomer, that is, a polyolefin polymerization using an olefin monomer without bonding with a non-porous inorganic material. Accordingly, the non-porous inorganic material can serve as a filler to which the polyolefin is bonded, and can compensate for mechanical properties of the polyolefin. Specifically, the polymerization can be performed in a short time within about 20%, preferably within about 17%, within about 15%, within about 14%, within about 13%, within about 12.5%, within about 12%, within about 11.7%, or within about 5% to 11.7% of the polymerization time for polymerizing an olefin monomer in the presence of a catalyst composition using a porous inorganic material without using a non-porous inorganic material. For example, assuming that the polymerization time for polymerizing the olefin monomer in the presence of a catalyst composition using a porous inorganic material instead of a non-porous inorganic material is 1 hour, the polymerization process can be performed in a short time of about 12 minutes or less, preferably about 10 minutes or less, about 8.5 minutes or less, about 8 minutes or less, about 7.5 minutes or less, about 7 minutes or less, or about 3 minutes to about 7 minutes.

For example, the polymerization may be performed at a temperature of about 50 °C to 110 °C and a pressure of about 1 bar to 100 bar for about 120 minutes or less, or about 1 minute to about 120 minutes under the condition that the content of the non-porous inorganic material and the olefin monomer used in the catalyst composition is 0.4 wt% or more, or 0.4 wt% to 12 wt% based on the total weight of the organic-inorganic hybrid polyolefin composite. Preferably, the polymerization may be performed for about 120 minutes or less, or about 1 minute to about 120 minutes, and preferably about 100 minutes or less, about 80 minutes or less, about 60 minutes or less, about 55 minutes or less, about 50 minutes or less, about 45 minutes or less, about 40 minutes or less, about 35 minutes or less, about 30 minutes or less, about 28 minutes or less, about 25 minutes or less, about 22 minutes or less, about 20 minutes or less, about 18 minutes or less, about 15 minutes or less, about 12 minutes or less, about 10 minutes or less, about 9 minutes or less, about 8 minutes or less, or about 7 minutes or less. When the polymerization time is prolonged for a long time, the non-porous inorganic material does not play a role as a filler to which the polyolefin is bonded due to excessive generation of high molecular weight, and cannot compensate for the mechanical properties of the polyolefin. In this aspect, the polymerization may be performed for about 120 minutes or less. However, in terms of productivity of the polyolefin through the polymerization reaction of the olefin monomer, the polymerization time may be about 1 minute or more, preferably about 2 minutes or more, or about 3 minutes or more. As described above, the polymerization time may vary depending on the amount of the olefin monomer added and the polymerization conditions such as the polymerization temperature, pressure, and whether or not hydrogen gas is added.

For example, the polymerization may be performed at a temperature of about 75 °C to about 83 °C and a pressure of about 8 bar to 25 bar for about 1 minute to about 12 minutes, about 2 minutes to about 10 minutes, about 2 minutes to about 8.5 minutes, about 3 minutes to about 8 minutes, about 3 minutes to about 7.5 minutes, or about 3 minutes to about 7 minutes, under the condition that the content of the non-porous inorganic material and the olefin monomer used in the catalyst composition is 0.5 wt% to 2.2 wt% based on the total weight of the organic-inorganic hybrid polyolefin composite.

Meanwhile, in another embodiment of the present disclosure, there is provided a material for a separator obtained by using the organic-inorganic hybrid polyolefin composite according to the embodiment.

Preferably, the material for the separator may be a Li-ion battery separator (LiBS).

As described above, the separator material of the present disclosure is prepared by performing a polymerization process of an olefin monomer after bonding the catalytically active component to the inorganic material with the specified content of the inorganic material, so that the materials are well dispersed and there is no migration. Accordingly, there is no deterioration in physical properties over time, and it is possible to manufacture according to the inorganic content, thereby effectively controlling the required physical properties such as excellent mechanical properties, wettability, dimensional stability, shutdown, and low thermal shrinkage.

### [ADVANTAGEOUS EFFECTS]

According to the present disclosure, a polymerization process of an olefin monomer is performed after bonding a catalytically active component to a non-porous inorganic material, so that mixing and dispersing of the non-porous inorganic material and olefin polymers are effective. Accordingly, an organic-inorganic hybrid polyolefin composite capable of solving the problem of deterioration in physical properties over time by migration of the olefin polymer while achieving excellent mechanical properties, wettability, dimensional stability, shutdown, and low thermal shrinkage.

### [BRIEF DESCRIPTION OF THE DRAWINGS]

FIG. 1 shows photographs of the catalyst composition of Preparation Example 1 obtained by a transmission electron microscope (TEM).
FIG. 2 shows photographs obtained by a transmission electron microscope (TEM) after taking samples for each reaction time during the polymerization process in Example 1.
FIG. 3 shows diagrams of the results of measuring a water contact angle on the surface of the polymer film obtained in Examples 1 to 3 and Comparative Examples 1 to 2.
FIG. 4 shows photographs of the film specimens before and after leaving at 140 °C for 1 hour in the evaluation of dimensional stability of the polymer films obtained in Examples 1 to 3 and Comparative Examples 1 to 2.
FIG. 5 shows photographs of the film specimens before and after leaving at 150 °C for 1 hour in the evaluation of shutdown function of the polymer films obtained in Examples 1 to 3 and Comparative Examples 1 to 2.

### [DETAILED DESCRIPTION OF THE EMBODIMENTS]

Hereinafter, embodiments of the present invention will be described in more detail in the following examples. However, the following examples are provided to illustrate embodiments of the present invention, and the content of the present invention is not limited by the following examples.

### [Examples]

### <Preparation of catalyst precursor>

### Synthesis Example 1: Preparation of first metallocene compound

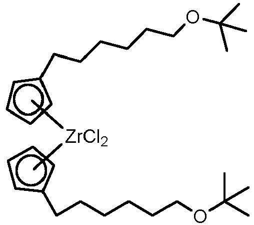

t-butyl-O-(CH₂)₆-Cl was prepared by the method shown in Tetrahedron Lett. 2951 (1988) using 6-chlorohexanol, and reacted with sodium cyclopentadienide (NaCp) to obtain t-butyl-O-(CH₂)₆-C₅H₅ (yield 60%, b.p. 80°C/0.1 mmHg).

In addition, t-butyl-O-(CH₂)₆-C₅H₅ was dissolved in tetrahydrofuran (THF) at -78 °C, and n-butyllithium (n-BuLi) was slowly added thereto. Thereafter, it was heated to room temperature and reacted for 8 hours. The lithium salt solution synthesized as described above was slowly added to a suspension solution of ZrCl₄(THF)₂ (170 g, 4.50 mmol)/THF (30 mL) at -78 °C, and further reacted for about 6 hours at room temperature. All volatiles were dried in vacuum and the resulting oily liquid material was filtered by adding hexane. The filtered solution was dried in vacuum, and hexane was added to obtain a precipitate at a low temperature (-20 °C). The obtained precipitate was filtered at a low temperature to obtain [t-butyl-O-(CH₂)₆-C₅H₄]₂ZrCl₂ in the form of a white solid (yield 92%).

¹H-NMR (300 MHz, CDCl₃, ppm): δ 6.28 (t, J=2.6 Hz, 2H), 6.19 (t, J=2.6 Hz, 2H), 3.31 (t, 6.6 Hz, 2H), 2.62 (t, J=8 Hz), 1.7 - 1.3 (m, 8H), 1.17 (s, 9H).

¹³C-NMR (300 MHz, CDCl₃, ppm): δ 135.09, 116.66, 112.28, 72.42, 61.52, 30.66, 30.31, 30.14, 29.18, 27.58, 26.00.

### Synthesis Example 2: Preparation of second metallocene compound

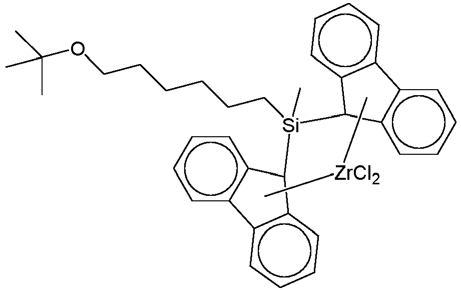

1.0 mole of tert-butyl-O-(CH₂)₆MgCl solution, Grignard reagent, was obtained from the reaction between tert-butyl-O-(CH₂)₆Cl compound and Mg(0) in THF solvent. The prepared Grignard compound was added to a flask containing (CH₃)SiCl₃ compound (176.1 mL, 1.5 mol) and THF (2.0 mL) at -30 °C, stirred at room temperature for at least 8 hours, and the filtered solution was vacuum dried to obtain tert-butyl-O-(CH₂)₆Si(CH₃)Cl₂ compound (yield 92%).

Fluorene (Flu, 3.33 g, 20 mmol), hexane (100 mL) and MTBE (methyl tert-butyl ether, 1.2 mL, 10 mmol) were added to a reactor at -20 °C, and 8 mL of n-BuLi (2.5 M in hexane) was slowly added thereto, followed by stirring at room temperature for 6 hours. After the stirring was completed, the reactor temperature was cooled to -30 °C. Then, the prepared lithium fluorenyl solution was slowly added to a solution of tert-butyl-O-(CH₂)₆Si(CH₃)Cl₂ (2.7 g, 10 mmol) dissolved in hexane (100 mL) at -30 °C over 1 hour. After stirring at room temperature for at least 8 hours, water was added for extraction, and evaporation was performed to obtain (tert-butyl-O-(CH₂)₆)(CH₃)Si(9-C₁₃H₁₀)₂ compound (5.3 g, yield 100%). A structure of the ligand was confirmed through ¹H-NMR.

¹H NMR(500 MHz, CDCl₃, ppm): δ -0.35 (CH₃Si, 3H, s), 0.26 (Si-CH₂, 2H, m), 0.58 (CH₂, 2H, m), 0.95 (CH₂, 4H, m), 1.17(tert-butyl-O, 9H, s), 1.29(CH₂, 2H, m), 3.21(tert-butyl-O-CH₂, 2H, t), 4.10(Flu-9H, 2H, s), 7.25(Flu-H, 4H, m), 7.35(Flu-H, 4H, m), 7.40(Flu-H, 4H, m), 7.85(Flu-H, 4H, d).

4.8 mL of n-BuLi (2.5 M in hexane) was slowly added to (tert-butyl-O-(CH₂)₆)(CH₃)Si(9-C₁₃H₁₀)₂(3.18 g, 6 mmol)/MTBE(20mL) solution at -20 °C and reacted for at least 8 hours while raising the temperature to room temperature. Thereafter, the prepared slurry solution of dilithium salts was slowly added to a slurry solution of ZrCl₄(THF)₂(2.26 g, 6 mmol)/hexane (20 mL) at -20 °C, followed by further reaction at room temperature for 8 hours. The precipitate was filtered and washed several times with hexane to obtain (tert-butyl-O-(CH₂)₆) (CH₃)Si(9-C₁₃H₉)₂ZrCl₂ compound in the form of a red solid (4.3 g, yield 94.5%).

¹H NMR(500 MHz, C₆D₆, ppm): δ 1.15(tert-butyl-O, 9H, s), 1.26 (CH₃Si, 3H, s), 1.58 (Si-CH2, 2H, m), 1.66 (CH2, 4H, m), 1.91(CH2, 4H, m), 3.32(tert-butyl-O-CH2, 2H, t), 6.86 (Flu-H, 2H, t), 6.90 (Flu-H, 2H, t), 7.15 (Flu-H, 4H, m), 7.60 (Flu-H, 4H, dd), 7.64(Flu-H, 2H, d), 7.77(Flu-H, 2H, d).

### <Preparation of catalyst composition>

### Preparation Example 1

50 mL of toluene was placed in a 300 mL glass reactor, 10 g of non-porous silica (SiO₂) was added thereto, and the reactor was stirred while raising the temperature to 40 °C. In this case, the non-porous silica had a specific surface area of 15 m²/g when measured according to ISO 9277 of the International Organization for Standardization. The non-porous silica was prepared by the Stover method (Stober, W. and A. Fink, Bohn, Journal of Colloid and Interface Science, 1968, 26, 62) through a hydrolysis process using tetraethyl orthosilicate (TEOS) under aqueous solvent conditions to which a NaOH catalyst was added.

Thereafter, 60 mL of a 10 wt% methylaluminoxane (MAO)/toluene solution (manufactured by Albermarle) was added, and the temperature was raised to 60 °C, followed by stirring at 200 rpm for 12 hours. After the reactor temperature was lowered to 40 °C, stirring was stopped, followed by settling for 10 minutes. Then, the reaction solution was decanted. After 100 mL of toluene was added and stirred for 10 minutes, stirring was stopped and the mixture was settled for 10 minutes. Then, the toluene solution was decanted.

Thereafter, 50 mL of toluene, 0.0055 mmol/gSiO₂ of the metallocene compound prepared in Synthesis Example 2, and 10 mL of toluene were added to the reactor and stirred at 200 rpm for 1 hour. Then, 0.0025 mmol/gSiO₂ of the metallocene compound prepared in Synthesis Example 1 and 10 mL of toluene were added to a reactor and stirred at 200 rpm for 2 hours. Herein, the molar ratio of the metallocene compound of Synthesis Example 1 and the metallocene compound of Synthesis Example 2 was 1:2.2. Then, 30 mL of toluene was added and stirred for 10 minutes, stirring was stopped and the mixture was settled for 30 minutes. Thereafter, the toluene solution was decanted.

30 mL of hexane was placed in the reactor, the hexane slurry was transferred to a filter dry, and the hexane solution was filtered. Thereafter, the obtained solid after filtering was dried under reduced pressure at 40 °C for 4 hours to prepare a hybrid supported catalyst composition.

Meanwhile, as a result of performing ICP analysis on the filtrate obtained after filtering, the content of transition metal (Zr) remaining in the filtrate was analyzed to be 0.1 ppm or less.

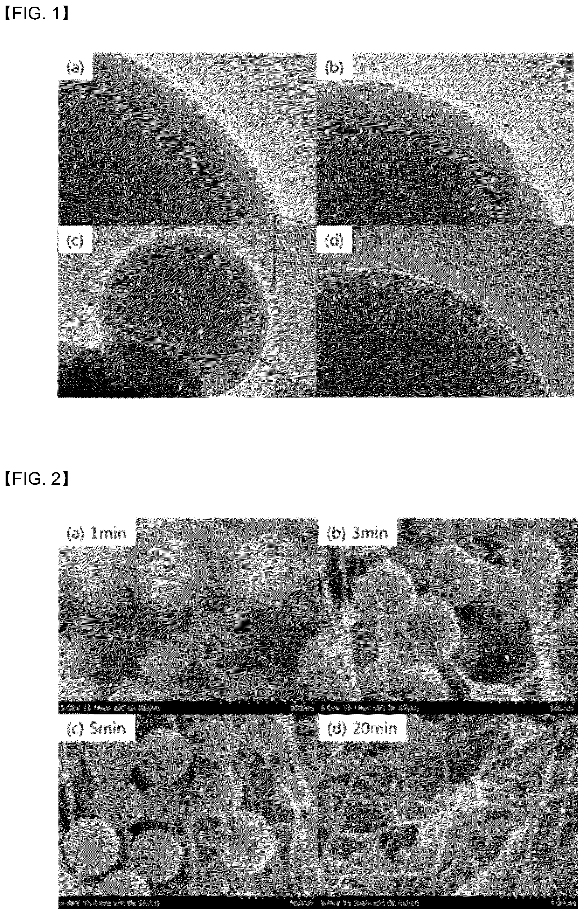

Photographs of the thus prepared catalyst composition obtained by a transmission electron microscope (TEM) are shown in FIG. 1. In particular, FIG. 1 (a) shows a surface of an inorganic material, and FIG. 1 (b) is a photograph when the cocatalyst is supported on an inorganic material. FIG. 1 (c) is a photograph after supporting a cocatalyst on an inorganic material, followed by a metallocene compound, and FIG. 1 (d) is an enlarged photograph of FIG. 1 (c). According to FIG. 1, it can be confirmed that the metallocene compound is bonded to the surface of the inorganic material.

### Comparative Preparation Example 1

A hybrid supported catalyst composition was prepared in the same manner as in Preparation Example 1, except that porous silica (SP9 manufactured by W.R. Grace) was used instead of the non-porous silica (SiO₂). In this case, the porous silica had a specific surface area of 300 m²/g when measured according to ISO 9277 of the International Organization for Standardization.

### <Preparation of organic-inorganic hybrid polyolefin composite>

### Example 1

2 mL of triethylaluminum (TEAL, 1.0 M hexane), the hybrid supported catalyst composition of Preparation Example 1 and hexane were placed in a vial and put into a 2 L autoclave reactor, and 0.8 kg of hexane was added thereto, followed by raising the temperature to 80 °C while stirring at 500 rpm. When the internal temperature of the reactor reached 78 °C, ethylene gas was introduced, and the reaction was performed while stirring at 500 rpm under 9 bar. At this time, the contents of the hybrid supported catalyst composition and ethylene gas were adjusted so that the content of silica was 0.5 wt% based on the total weight of the organic-inorganic hybrid polyethylene composite. In addition, the polymerization was performed within 20 minutes by varying the polymerization time to 1 minute, 3 minutes, 5 minutes, 7 minutes, and 20 minutes, respectively. Hexane was first removed from the polymer obtained after completion of the reaction through a filter, and then the polymer was washed with hexane. Then, the hexane was removed again through a filter, and the resulting polymer was dried in a vacuum oven at 80 °C for 4 hours to obtain an organic-inorganic hybrid polyethylene composite containing an ethylene homopolymer in the form of a powder.

In particular, the organic-inorganic hybrid polyethylene composite obtained by performing the above-described polymerization for 3 minutes to 7 minutes was used as a final product, and physical properties thereof were evaluated as in the following test example.

Meanwhile, photographs obtained by a transmission electron microscope (TEM) after taking samples for each reaction time during the polymerization process described above are shown in FIG. 2. As shown in FIG. 2, it can be confirmed that how the polymer grows when (a) 1 min, (b) 3 min, (c) 5 min, and (d) 20 min have elapsed from the initiation of the polymerization reaction, respectively, and also confirmed that the polymer grows from the metallocene compound bonded to the non-porous inorganic material.

### Examples 2 to 3

An organic-inorganic hybrid polyethylene composite containing an ethylene homopolymer in the form of a powder was prepared in the same manner as in Example 1, except that the ethylene polymerization reaction was performed in the presence of the above-described hybrid supported catalyst composition so that the content of silica was 2.2 wt% and 8.0 wt%, respectively, based on the total weight of the organic-inorganic hybrid polyethylene composite as described in Table 1 below, followed by washing and drying.

### Comparative Example 1

An organic-inorganic hybrid polyethylene composite containing an ethylene homopolymer in the form of a powder was prepared in the same manner as in Example 1, except that the polymerization process was performed using the hybrid supported catalyst composition of Comparative Preparation Example 1 instead of the hybrid supported catalyst composition of Preparation Example 1, followed by washing and drying.

In particular, the polymerization process of Comparative Example 1 was performed under the same conditions as in Example 1, but the hybrid supported catalyst composition of Comparative Preparation Example 1 including porous silica rather than non-porous silica was applied. Therefore, as the porous silica was broken during ethylene polymerization, the amount of ethylene polymerization increased instantaneously and the content of silica was relatively sharply reduced. Thus, as shown in Table 1 below, the content of silica was less than 0.01 wt% based on the total weight of the organic-inorganic hybrid polyethylene composite.

### Comparative Example 2

An organic-inorganic hybrid polyethylene composite containing an ethylene homopolymer in the form of a powder was prepared in the same manner as in Example 1, except that the ethylene polymerization reaction was performed in the presence of the above-described hybrid supported catalyst composition so that the content of silica was 0.3 wt% based on the total weight of the organic-inorganic hybrid polyethylene composite as described in Table 1 below, followed by washing and drying.

### <Test Example: Evaluation of physical properties of organic-inorganic hybrid polyolefin composite>

Physical properties of the organic-inorganic hybrid polyethylene composites prepared in Examples and Comparative Examples were measured in the following manner, and the results are shown in Table 1 below.

### 1) Young's modulus and yield strength

Film specimens were prepared from the polymers obtained in Examples and Comparative Examples according to ASTM D 638 of the American Society for Testing and Materials, and Young's modulus and Yield strength were measured using UTM (Universial Tensile Machine) according to the same method.

### 2) Wettability (Contact angle)

Film specimens were prepared from the polymers obtained in Examples and Comparative Examples according to ASTM D 5946 of the American Society for Testing and Materials. After dropping water on a surface of the film specimen, a water contact angle (Degree, °) on the surface of the polymer film was measured, and wettability was confirmed. As a contact angle meter, DSA 100 manufactured by KRUSS was used.

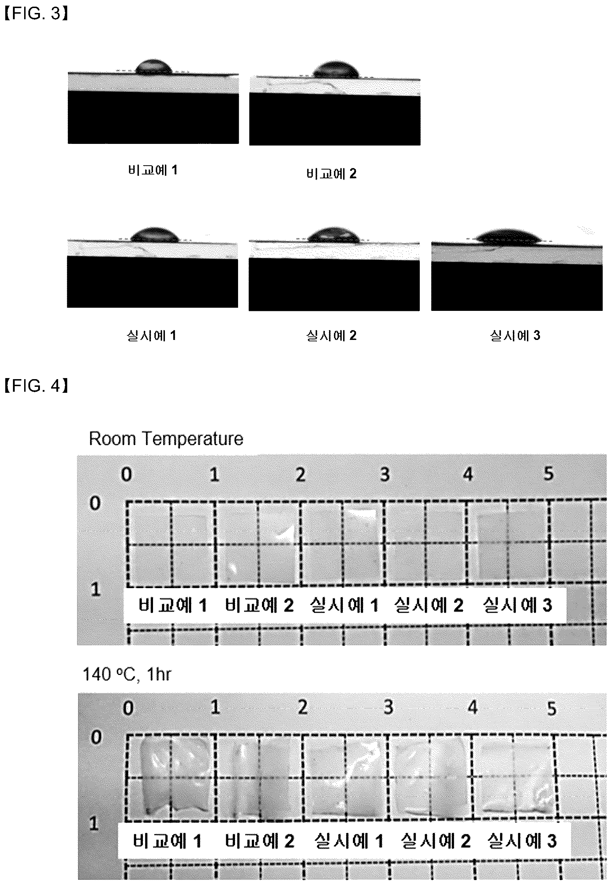

Schematic diagrams showing the results of measuring the water contact angle on the surface of the polymer film obtained in Examples and Comparative Examples are shown in FIG. 3. It was confirmed that the water contact angle of the organic-inorganic hybrid polyethylene composites prepared in Examples 1 to 3 was significantly lower than the water contact angle of the organic-inorganic hybrid polyethylene composites prepared in Comparative Examples 1 and 2. As the low contact angle means good wettability to water, and it can be seen that the electrolyte can easily penetrate when applied as a separator of a Li-ion battery (LiB).

### 3) Dimensional stability

In order to check dimensional stability, the film specimen prepared in the same manner as in the wettability test was left at 140 °C for 1 hour. Shrinkage was confirmed by measuring the area before and after leaving.

Herein, heat shrinkage occurred by leaving the film at 140 °C for 1 hour as described above. When the area after leaving the film specimen was 95% or more of the area before leaving, it was indicated as 'good', when it was 90% or more and less than 95%, it was indicated as 'normal', and when it was less than 90%, it was indicated as 'bad'.

Photographs of the film specimens before and after leaving in the evaluation of dimensional stability are shown in FIG. 4. It can be seen that the dimensional stability of the organic-inorganic hybrid polyethylene composites prepared in Examples 1 to 3 is significantly superior to that of the organic-inorganic hybrid polyethylene composites prepared in Comparative Examples 1 and 2.

### 4) Shutdown function

In order to check shutdown function, the film specimen prepared in the same manner as in the wettability test was placed on a filter paper and left at 150 °C for 1 hour, and it was confirmed that how much the film could maintain its original shape as it melted.

Herein, when the film was left at 150 °C for 1 hour as described above, a phenomenon in which the film melts was observed. When the shape of the film specimen maintained its initial shape before leaving even after leaving under high temperature conditions, it was indicated as 'good', when the outline of its initial shape before leaving was maintained, it was indicated as 'normal', and when it was difficult to check the outline of its initial shape before leaving, it was indicated as 'bad'.

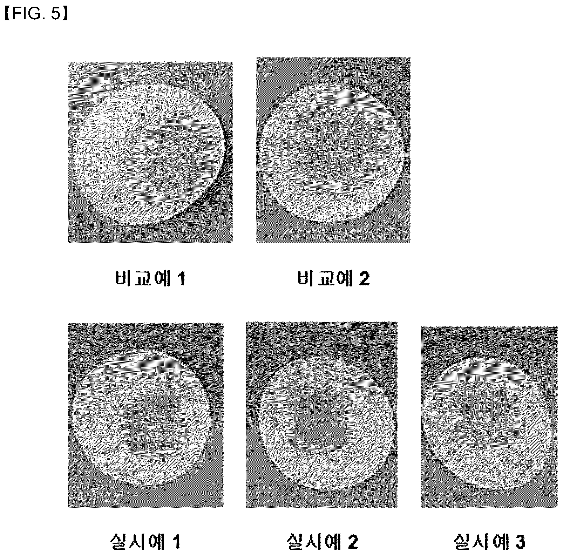

Photographs of the film specimens before and after leaving in the evaluation of shutdown function are shown in FIG. 5. It can be seen that the film shape is hardly left and the film specimens are melted into the filter paper in Comparative Examples 1 and 2, whereas the film specimens are properly melted into the filter paper while maintaining the initial shape of the film in Examples 1 to 3.

### 5) Molecular weight (Mw, Mn) and molecular weight distribution (PDI, polydispersity index)

The weight average molecular weight (Mw) and the number average molecular weight (Mn) of the polymers obtained in Examples and Comparative Examples were measured using gel permeation chromatography (GPC manufactured by Water), and the molecular weight distribution (PDI, Mw/Mn) was calculated by dividing the weight average molecular weight by thenumber avera molecular weight.

Specifically, PL-GPC220 manufactured by Waters was used as the gel permeation chromatography (GPC) instrument, and a Polymer Laboratories PLgel MIX-B 300 mm length column was used. An evaluation temperature was 160 °C, and 1,2,4-trichlorobenzene was used for a solvent at a flow rate of 1 mL/min. Each polyethylene sample was pretreated by dissolving in 1,2,4-trichlorobenzene containing 0.0125% of BHT (2,6-bis(1,1-dimethylethyl)-4-methylphenol) at 160 °C for 10 hours using a GPC analyzer (PL-GP220), and the sample with a concentration of 10 mg/10 mL was supplied in an amount of 200 µL. Mw and Mn were obtained using a calibration curve formed using a polystyrene standard. 9 kinds of the polystyrene standard were used with the molecular weight of 2000 g/mol, 10000 g/mol, 30000 g/mol, 70000 g/mol, 200000 g/mol, 700000 g/mol, 2000000 g/mol, 4000000 g/mol, and 10000000 g/mol.

**[Table 1]**

| | Example 1 | Example 2 | Example 3 | Comparative Example 1 | Comparative Example 2 |
|---|---|---|---|---|---|
| Whether silica is porous | Non-porous | Non-porous | Non-porous | Porous | Non-porous |
| Silica specific surface area (m2/g) | 15 | 15 | 15 | 300 | 15 |
| Silica content (wt%) | 0.5 | 2.2 | 8.0 | Less than 0.01 | 0.3 |
| Young's modulus (MPa) | 310 | 500 | 305 | 200 | 210 |
| Yield Strength (MPa) | 23.5 | 26.5 | 22 | 17 | 22 |
| Wettability (Contact Angle, °) | 40 | 35 | 30 | 70 | 50 |
| dimensional stability | Good | Good | Good | Bad | Normal |
| Shutdown function | Good | Good | Good | Bad | Normal |
| Mn (g/mol) | 93,577 | 87,974 | 88,708 | 66,571 | 94,194 |
| Mw (g/mol) | 302,080 | 301,370 | 301,727 | 314,319 | 298,717 |
| PDI (Mw/Mn) | 3.23 | 3.43 | 3.40 | 4.72 | 3.17 |

Referring to Table 1 above, the organic-inorganic hybrid polyethylene composites of Examples 1 to 3 according to the present disclosure were prepared by performing an ethylene polymerization process after bonding the metallocene compound to the non-porous silica with the specified content of the inorganic material. Accordingly, mixing and dispersing of inorganic materials and olefin polymers are effective, excellent mechanical properties, wettability, dimensional stability, shutdown, and low thermal shrinkage can be achieved, and it is possible to solve the problem of deterioration in physical properties over time by migration of the olefin polymer.

## Claims

1. An organic-inorganic hybrid polyolefin composite comprising a polyolefin and a non-porous inorganic material bonded to at least a portion of the polyolefin, wherein the non-porous inorganic material is included in an amount of 0.4 wt% or more based on the total weight of the organic-inorganic hybrid polyolefin composite.

2. The organic-inorganic hybrid polyolefin composite according to Claim 1, wherein the non-porous inorganic material is included in an amount of 0.4 wt% to 12 wt% based on the total weight of the organic-inorganic hybrid polyolefin composite.

3. The organic-inorganic hybrid polyolefin composite according to Claim 1, wherein the polyolefin comprises a homopolymer or a copolymer of an olefin monomer selected from the group consisting of ethylene, propylene, 1-butene, 1-pentene, 1-hexene, 4-methyl-1-pentene, 1-octene, 1-decene, 1-dodecene, 1-tetradecene, 1-hexadecene, 1-octadecene, and 1-eicosene.

4. The organic-inorganic hybrid polyolefin composite according to Claim 1, wherein the non-porous inorganic material has a specific surface area of 100 m²/g or less when measured according to ISO 9277 of the International Organization for Standardization.

5. The organic-inorganic hybrid polyolefin composite according to Claim 1, wherein the non-porous inorganic material comprises at least one selected from the group consisting of alumina, magnesia, zirconia, zeolite, and silica.

6. The organic-inorganic hybrid polyolefin composite according to Claim 1, wherein the non-porous inorganic material is chemically bonded to at least a portion of the polyolefin.

7. The organic-inorganic hybrid polyolefin composite according to Claim 1, wherein a weight average molecular weight is 300,000 g/mol or more.

8. The organic-inorganic hybrid polyolefin composite according to Claim 1, wherein a molecular weight distribution (Mw/Mn) is 2.5 to 4.5.

9. The organic-inorganic hybrid polyolefin composite of Claim 1, wherein Young's modulus is 250 MPa or more when measured according to ASTM D 638 of the American Society for Testing and Materials.

10. The organic-inorganic hybrid polyolefin composite according to Claim 1, wherein a water contact angle is 45 ° or less when measured according to ASTM D 5946 of the American Society for Testing and Materials.

11. A method of preparing the organic-inorganic hybrid polyolefin composite according to Claim 1, compising:
polymerizing an olefin monomer in the presence of a catalyst composition in which a catalytically active component comprising at least one first metallocene compound represented by the following Chemical Formula 1; and at least one second metallocene compound selected from compounds represented by the following Chemical Formula 2 is bonded to a non-porous inorganic material,
wherein a content of the non-porous inorganic material is 0.4 wt% or more based on the total weight of the organic-inorganic hybrid polyolefin composite:
[Chemical Formula 1] (Cp¹R^{a})ₙ(Cp²R^{b})M¹Q¹₃₋ₙ
in Chemical Formula 1,
M¹ is a Group 4 transition metal;
Cp¹ and Cp² are the same as or different from each other, and are each independently any one selected from the group consisting of cyclopentadienyl, indenyl, 4,5,6,7-tetrahydro-1-indenyl, and fluorenyl radicals; wherein they are unsubstituted or substituted with C₁₋₂₀ hydrocarbon;
R^{a} and R^{b} are the same as or different from each other, and are each independently hydrogen, C₁₋₂₀ alkyl, C₁₋₂₀ alkoxy, C₂₋₂₀ alkoxyalkyl, C₆₋₂₀ aryl, C₆₋₂₀ aryloxy, C₂₋₂₀ alkenyl, C₇₋₄₀ alkylaryl, C₇₋₄₀ arylalkyl, C₈₋₄₀ arylalkenyl, or C₂₋₁₀ alkynyl, provided that at least one of R^{a} and R^{b} is not hydrogen;
Q¹ is halogen, C₁₋₂₀ alkyl, C₂₋₂₀ alkenyl, C₇₋₄₀ alkylaryl, C₇₋₄₀ arylalkyl, C₆₋₂₀ aryl, substituted or unsubstituted C₁₋₂₀ alkylidene, a substituted or unsubstituted amino group, C₂₋₂₀ alkoxyalkyl, C₂₋₂₀ alkylalkoxy, or C₇₋₄₀ arylalkoxy; and
n is 1 or 0; 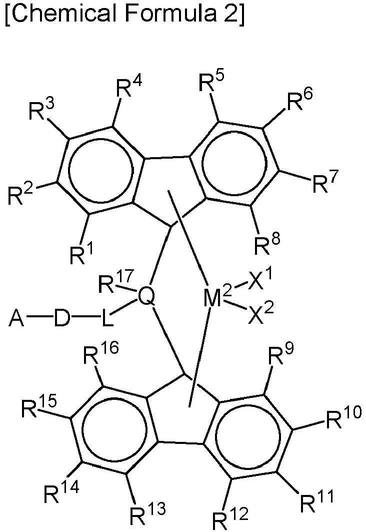
in Chemical Formula 2,
R¹ to R¹⁷ are the same as or different from each other, and are each independently hydrogen, halogen, C₁₋₂₀ alkyl, C₂₋₂₀ alkenyl, C₆₋₂₀ aryl, C₇₋₂₀ alkylaryl, or C₇₋₂₀ arylalkyl;
L is C₁₋₁₀ linear or branched alkylene;
D is -O-, -S-, -N(R)- or -Si(R)(R')-, wherein R and R' are the same as or different from each other, and are each independently hydrogen, halogen, C₁₋₂₀ alkyl, C₂₋₂₀ alkenyl, or C₆₋₂₀ aryl;
A is hydrogen, halogen, C₁₋₂₀ alkyl, C₂₋₂₀ alkenyl, C₆₋₂₀ aryl, C₇₋₂₀ alkylaryl, C₇₋₂₀ arylalkyl, C₁₋₂₀ alkoxy, C₂₋₂₀ alkoxyalkyl, C₂₋₂₀ heterocyclo alkyl, or C₅₋₂₀ heteroaryl;
Q is carbon, silicon or germanium;
M² is a Group 4 transition metal; and
X¹ and X² are the same as or different from each other, and are each independently halogen, C₁₋₂₀ alkyl, C₂₋₂₀ alkenyl, C₆₋₂₀ aryl, a nitro group, an amido group, C₁₋₂₀ alkylsilyl, C₁₋₂₀ alkoxy, or a C₁₋₂₀ sulfonate group.

12. The method of preparing the organic-inorganic hybrid polyolefin composite according to Claim 11, wherein the content of the non-porous inorganic material is 0.4 wt% to 12 wt% based on the total weight of the organic-inorganic hybrid polyolefin composite.

13. The method of preparing the organic-inorganic hybrid polyolefin composite according to Claim 11, wherein the olefin monomer comprises at least one selected from the group consisting of ethylene, propylene, 1-butene, 1-pentene, 1-hexene, 4-methyl-1-pentene, 1-octene, 1-decene, 1-dodecene, 1-tetradecene, 1-hexadecene, 1-octadecene, and 1-eicosene.

14. The method of preparing the organic-inorganic hybrid polyolefin composite according to Claim 11, wherein a molar ratio of the first metallocene compound to the second metallocene compound is 1:9 to 9:1.

15. A separator material obtained by using the organic-inorganic hybrid polyolefin composite according to any one of Claims 1 to 10.
